# EUROPEAN PATENT APPLICATION

(11) **EP 1 429 540 A1**
(43) Date of publication of application: **16.06.2004**
(21) Application number: 03256494.0
(22) Date of filing: 15.10.2003
(51) Int. Cl.: H04N 3/15, H04N 1/387

(54) **Digital camera**

(30) Priority: 13.12.2002 US 319349
(71) Applicant: Fujifilm Electronic Imaging Limited, Hemel Hempstead, Herts, HP2 7RH (GB)
(72) Inventor: Gouch, Martin Philip, Herts HP2 4ND (GB)
(74) Representative: Skone James, Robert Edmund

(57) **Abstract**

A digital camera has a photosensitive detector assembly comprising at least two semiconductor, photosensitive detector arrays (3A-3D). An optical guide assembly (6-8) guides light rays defining an image of an object onto the detector arrays (3A-3D) such that different areas of the image are detected by respective arrays and such that the areas are abutting or overlapping.

## Description

The invention relates to digital cameras.

For digital cameras used in the professional photographer's market there is an engineering compromise between the number of pixels defined by a photosensitive array in the camera, the size of the pixels and the area of detector. These engineering compromises are not always compatible with the user requirements, especially for what is termed as medium format cameras.

For the user it is desirable to have more pixels as this gives a higher resolution image.

Also the user desires the sensitive area of the camera to be similar to the film sensitive area as they have invested in expensive equipment, such as lenses, which is tuned to operate at medium format film size. Medium format film size is typically in the region of a rectangle of around 60mm in length and height. Digital camera sensitive areas are typically small with the cheaper camera shaving sensitive area's similar to 15 by 24mm and the very expensive cameras having sensitive areas similar to 38 by 38mm. Lenses used with smaller chips operate at non-optimal conditions and do not give the best results.

From this it would seem sensible to develop digital cameras with more pixels over a large area. Unfortunately this conflicts directly with engineering requirements. For a given sensitive area there is an optimum number of pixels which can be used. As more pixels are put into the area, the area of each pixel reduces and as such the sensitivity of the pixels reduces. The larger the sensitive area of a pixel the more photons are captured and as such the more electrons to generate a pixel are generated. Photographers also require the sensitivity of digital cameras to be as good as film. Thus there is a limit on the number of pixels which can be put in a sensitive area.

The simple answer would be to increase the size of the sensitive area but this too has its problems. The larger the sensitive area of a detector or digital device the more chances there are of a defect. This means to get a defect free, or low defect rate, device it is desirable to keep the size of the detector down. In the example of a number of silicon chips, a small format area device is considerably cheaper to manufacture than a single chip of the same overall area as the sum of the smaller chips. This is because the larger chip requires a much lower defect per unit area rate to yield the same area. For example if a process had a defect rate of one defect per 60 square mm then for a device that had a size of 30 square mm the yield would be 50% and in any 60 square mm only one usable device would be generated. If devices were made with a size of 6 square mm, 9 usable devices and one faulty device would be obtained in the same 60 square mm. So to get 60 square mm of useable device on a 30 square mm size device would require almost twice as much silicon wafer as the same 60 square mm of useable device from a 6 square mm size device.

Some camera manufacturers have understood this and overcome the problem of the expense of large format sensitive areas by using a combination of smaller sensitive area devices and a technique known a macro dither where the large format area is made up of a series of exposures from a smaller format area chip that has been moved between exposures from one area of the large format to another area of the large format not yet exposed creating a mosaic of exposure which are then combined to produce a single large format image.

The disadvantage of this technique is that it is only usable on static images such as still life as the subject matter must not move between exposures and each exposure has to have exactly the same light levels which required very accurate flash levels when flash lighting is used.

In accordance with the present invention, a digital camera comprises a photosensitive detector assembly comprising at least two photosensitive detector arrays, and an optical guide assembly for guiding light rays defining an image of an object onto the detector arrays such that different areas of the image are detected by respective arrays and such that the areas are abutting or overlapping.

To overcome the limitation of using a single small sensitive area detector which needs to be moved between exposures, multiple detectors can be used. In this configuration a single exposure time can be activated on all the smaller detectors enabling a single flash of flash lighting to be used and pictures of non-static objects to be produced. This is economic because many small detectors are cheaper than a single large detector.

Another advantage of using a plurality of detector arrays over the use of a single array is that it is possible to read out the information from each array in parallel so that, for example, if four arrays are used instead of one, the data can be read out four times more quickly than with the larger array. This reduces the time between exposures which is of benefit to users.

In theory, the detector arrays could be butted together but in general this is impractical due to the nature of the detector arrays themselves. Preferably, therefore, the optical guide assembly is arranged such that the detector arrays are optically abutted or overlapped.

There are a variety of ways in which the detector arrays can be optically abutted. In one example, the optical guide assembly includes at least one beam splitter for generating a plurality of identical representations of the image of the object, the detector arrays being located so as to detect said respective different areas of the image from two or more of the representations. In this case, one representation may be associated with two or more detector arrays. Preferably, however, each detector array detects the respective area of the image from a different one of said representations. This simplifies the construction of the device.

Any conventional beam splitter could be used but a particularly preferred beam splitter is a two layer cube beam splitter.

Instead of a beam splitter, the optical guide assembly may be adapted to guide different regions of the image to different locations at which respective detector arrays are located. An example is a micro prism or micro lens array.

In this case, each image region may be larger than the area which is to be detected by a detector array although in the preferred arrangement each image region is substantially coincident with a respective one of the image areas.

Once each detector array has detected image information from the respective area, it is necessary to combine the data together to form a single data array defining the image. Typically, a process will be provided for carrying out this step and this could be done using a correlation technique as for example described in GB-A-2206011 or by applying a predetermined computation as a result of calibrating the system with a test chart where the distortions or correction is required to make a seamless image are precalculated and applied as a fixed process.

The camera may further be provided with means for using multiple shot micro dither to fill in red, green and blue pixels rather than use interpolation. This would simply require moving the detector arrays or alternatively using the technique described in US Patent Application No. 10/170782 incorporated herein by reference.

Some examples of a digital camera according to the present invention will now be described with reference to the accompanying drawings, in which:-
Figure 1 is a block diagram showing the primary components of the camera;
Figure 2 is a schematic, block diagram of a first example of an optical guide assembly;
Figure 3 is a block diagram illustrating a second example of an optical guide assembly; and,

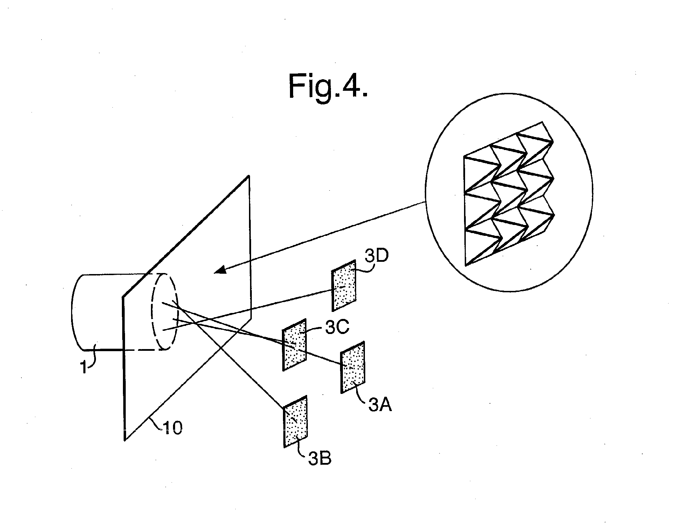

Figure 4 illustrates a third example of an optical guide assembly.

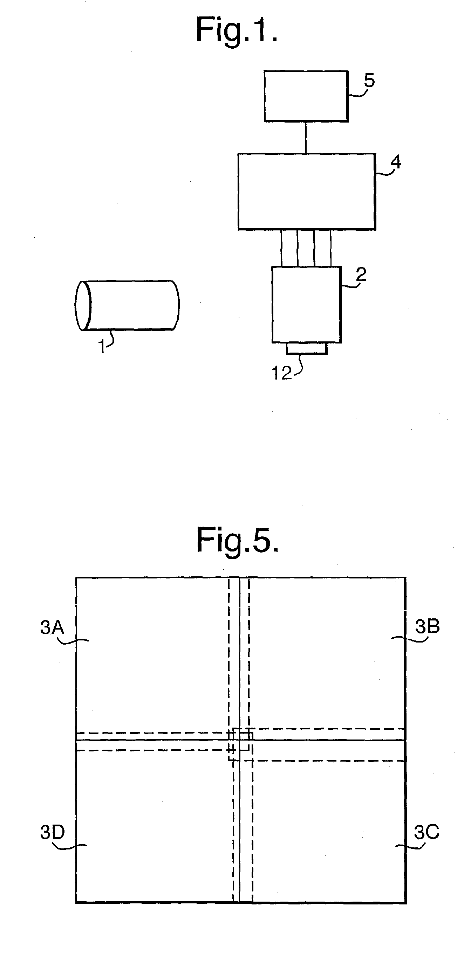

Figure 1 illustrates schematically the primary components of a digital camera including an optical lens 1 which focusses light onto a detection assembly 2 to be described below. The detection assembly 2 comprises a set of four silicon chips defining respective photosensitive detector arrays 3A-3D, each connected in parallel to a microprocessor 4 which in turn is connected to an image storage device 5. These components will all be housed within a housing (not shown) in a conventional manner.

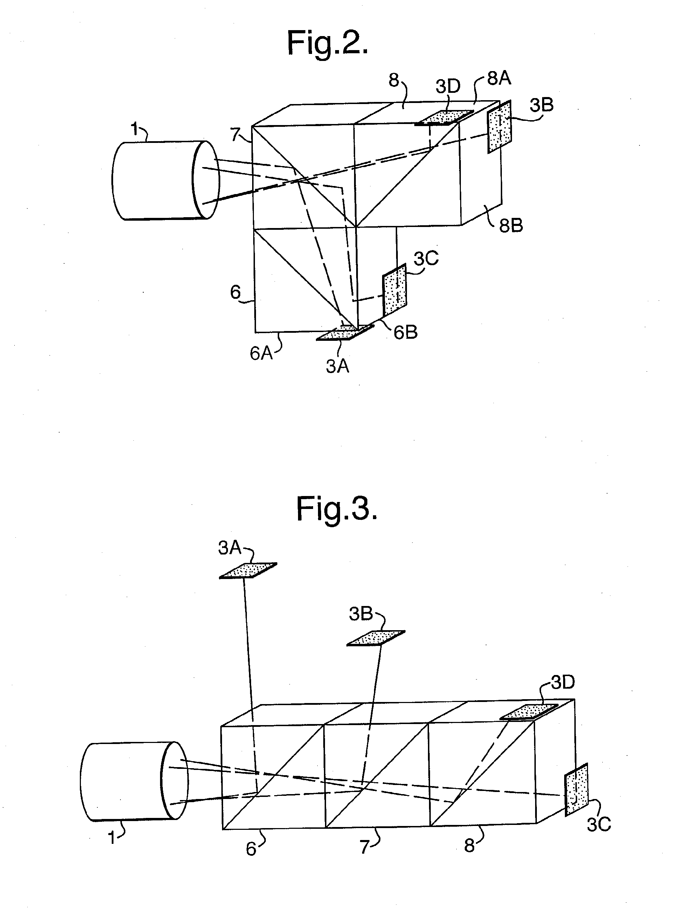

A first example of a detector assembly 2 is shown in Figure 2 and comprises a set of three cube beam splitters 6-8. Light entering the beam splitter 7 is split with 50% passing to the beam splitter 6 and the remainder to the beam splitter 8. In each beam splitter 6,8 the light is further split so that it is focussed on the exposed faces 6A,6B,8A,8B respectively. The silicon detector arrays 3A-3D are positioned on respective faces 6A,6B,8A,8B in such a way that optically they each receive light from different areas of the original image but with some overlap. This can be seen from Figure 5 which shows the small overlap which exists. Thus, Figure 5 represents the entire image which is focussed onto the faces 6A etc. and this is notionally divided into quadrants. The detector array 3A detects light in the top left hand quadrant but overlaps slightly into the top right hand quadrant and lower left hand quadrant. In a similar way the arrays 3B,3C and 3D have slight overlaps.

Figure 3 illustrates a second example in which the beam splitters 6-8 are arranged end to end. In this case, the detector arrays 3A,3B are located at a distance from the beam splitters 6,7 so that they will receive focussed radiation from the image.

Figure 3 illustrates a further alternative in which the beam splitters of the previous examples are replaced by a micro prism (or micro lens) array 10. This array 10 focusses light from different portions of the image, in this case different quadrants, onto the respective detector arrays 3A-3D.

Once the image has been detected by the arrays 3A-3D, the data is downloaded in parallel to the microprocessor 4. The microprocessor 4 then assembles the data into a single data set to be stored in the store 5 with a data value corresponding to radiation intensity for each pixel. In order to handle overlap between the data sets as shown in Figure 5, the microprocessor 4 can carry out a conventional correlation process as described in GB-A-2206011 or alternatively a calibration process based on a test chart and constituting a predetermined calculation to compute and store the correct data values.

A detector assembly position adjustment device 12 is provided which can be controlled by the microprocessor 4 to move the assembly by a small amount to achieve micro dither.

## Claims

1. A digital camera having a photosensitive detector assembly comprising at least two photosensitive detector arrays, and an optical guide assembly for guiding light rays defining an image of an object onto the detector arrays such that different areas of the image are detected by respective arrays and such that the areas are abutting or overlapping.

2. A camera according to claim 1, wherein the optical guide assembly is arranged such that the detector arrays are optically abutted or overlapped.

3. A camera according to claim 1 or claim 2, wherein the optical guide assembly includes at least one beam splitter for generating a plurality of identical representations of the image of the object, the detector arrays being located so as to detect said respective different areas of the image from two or more of the representations.

4. A camera according to claim 3, wherein each detector array detects the respective area of the image from a different one of said representations.

5. A camera according to claim 3 or claim 4, wherein said at least one beam splitter comprises a two layer cube beam splitter.

6. A camera according to any of claims 2 to 5, wherein the optical guide assembly is adapted to guide different regions of the image to different locations at which respective detector arrays are located.

7. A camera according to claim 6, wherein each image region is substantially coincident with a respective one of said image areas.

8. A camera according to any of the preceding claims, wherein said optical guide assembly comprises one of a microprism or microlens array.

9. A camera according to any of the preceding claims, further comprising a processor for generating a digital data array defining the image from data received from said detectors.

10. A camera according to claim 9, wherein said processor is adapted to apply a predetermined computation to data received from each detector array in order to generate said digital data defining the complete image.

11. A camera according to claim 9 or claim 10, wherein said processor is adapted to carry out a correlation of data received from each detector array in order to generate data defining the complete image.

12. A camera according to any of the preceding claims, further comprising a focussing lens adapted to focus incoming light rays from an object onto the detector arrays.

13. A camera according to any of the preceding claims, wherein the detector arrays are sensitive to light in the visible wavelength range.

14. A camera according to any of the preceding claims, wherein each detector array is fabricated from a respective semiconductor chip.

15. A camera according to claim 14, wherein each chip is a silicon chip.

16. A camera according to any of the preceding claims, wherein the detector arrays are semiconductor arrays.
